# EUROPEAN PATENT SPECIFICATION

(11) **EP 2 335 194 B1**
(45) Date of publication and mention of the grant of the patent: **10.02.2016**
(21) Application number: 09776965.7
(22) Date of filing: 03.07.2009
(51) Int. Cl.: G06K 19/07, G06K 19/08

(54) **TRANSPONDER DEVICE**
TRANSPONDERVORRICHTUNG
DISPOSITIF TRANSPONDEUR

(30) Priority: 10.09.2008 US 208144
(43) Date of publication of application: 22.06.2011
(73) Proprietor: Smartrac IP B.V., 1077 XX Amsterdam (NL)
(72) Inventor: STOLE, Scott, Waconia MN 55317 (US); BENDER, Brian, Victoria MN 55386 (US); ZIRBES, Glen, Silver Lake MN 55381 (US); HOLSAPPLE, Tom, Silver Lake MN 55381 (US)
(74) Representative: von den Steinen, Axel
(86) International application number: PCT/EP2009/004853
(87) International publication number: WO 2010/028714

(56) References cited:
- EP-A1- 0 619 246
- EP-A1- 0 996 085
- EP-A1- 1 308 883
- EP-A1- 1 610 263
- CH-A5- 688 391
- JP-A- 2002 118 490
- US-A1- 2008 180 255

## Description

The present invention pertains to a transponder device comprising a transponder unit, which is arranged in a housing and has an antenna device and a chip, the housing forming a receiving space between a transparent front wall and a housing rear wall having arranged therein an optically readable information carrier, the housing rear wall having a fastening edge defining a fastening plane of the housing.

US 2008/0180255 A1 teaches a method and system for making a label. The label can include a circuit disposed on a face of a substrate. The substrate may also contain printed indicia. The substrate may further be sealed using a laminate and an adhesive layer may be applied to a portion of the seal. The label may further include a release layer that covers the adhesive prior to adhering the label to a container.

Document EP 1 610 263 A1 discloses a device that comprises at least two data storage elements such as e.g. an RFID transponder and a barcode, wherein the latter is non-visible for the unaided human eye and comprises coded information. The device allows for a backup of information between the two data storage elements, in order to prevent inadvertent or malicious data loss. Further aspects of the disclosure are related to the interdependent or the cooperative use of both storage elements in the framework of a product security tracking and tracing scheme

EP 0 619 246 A1 relates to a transponder that is to be designed in such a manner and fastened to that point of a transport container which is easily accessible and provides optimum signal transmission and signal reception, the transponder being intended to be fastened on the transport container in a manner which saves as much space as possible and which has as little need as possible for changing the shape of the transport container. This is achieved by arranging the transponder in the centre in or on the baseplate of the transport container and by designing it either as a flat disc or an annular disc and by accommodating it in a correspondingly shaped recess in the baseplate or by fastening it to the plane baseplate or by designing it as a rod and accommodating it in a recess of a carrier strip fastened on the plane baseplate of the transport container.

EP 1 308 883 A1 teaches an installation structure for an RFID tag, which effectively protects the RFID tag from external stress or impact during the storage, transportation and usage, and allows communication with the external.

JP 2002-118490 is about an RFID tag that is housed in an opening part of a vessel main body of a conductive material. A lid of a conductive material is fixed to the vessel main body using a vis to cover the entire perimeter of the RFID tag. A magnetic flux leakage path is formed on a division surface between the vessel main body and the lid. The leakage magnetic flux passing the magnetic flux leakage path is used for communication between the RFID tag and an external read/write terminal device.

CH 688 391 A5 discloses a transponder that is accommodated in a separate housing. The housing is accommodated in an input device of the object and is fixed on the object. The housing may be closed by a top lid or may be formed as a housing which is open at the top. The input device is formed as an open hollow space in the object. The hollow space has fixing elements on its base or on its side wall. The housing is at least partially placed into the hollow space. The rim of the housing or the rim of the top lid are connected to the fixing elements.

EP 0 996 085 A1 describes a container that is made of two injection molded sections which have snap together closure. The first section comprises a projection, a recess for a transponder and a raised section. The second section has a raised section and four longitudinal guide recesses at 90 degrees to each other to take up an enclosed chip of the transponder. The transponder is enclosed in the container and then injection molded onto an article container.

Transponder devices employed for identifying and locating objects are routinely mounted on the surface of the respective objects and are thus placed in an exposed position, in which position said objects are exposed to environmental conditions. The objects typically provided with transponder devices are primarily consumer goods located in less harsh environments, such as retail outlets. In contrast, the permanent and functionally reliable arrangement of transponder devices on objects located in a harsh environment frequently proves to be problematic. In this context, the field of logistics where for instance transponder devices are attached to containers or also to vehicles serving for the handling of containers can be taken as an example. The ambient conditions prevailing under these circumstances involve the risk that a transponder device located at the surface of an object may be readily destroyed by mechanical forces.

Accordingly there is the risk of a malfunctioning of the transponder device, for instance by destruction of the antenna device or the chip, and thus of having no access to the information stored on the chip.

As a consequence, it is the object of the present invention to propose a transponder device particularly suited for employment under harsh conditions.

In order to attain this object, the transponder device according to the invention exhibits the features of claim 1.

According to the invention, the transponder device comprises a transponder unit, which is arranged in a housing and has an antenna device and a chip, the housing forming a receiving space between a transparent front wall and a housing rear wall having arranged therein an optically readable information carrier, the housing rear wall having a fastening edge defining a fastening plane of the housing.

On the basis of the transponder device according to the invention, there is provided a transponder device allowing on the one hand shielding of the transponder device from environmental conditions, such as forces directly exerted on the transponder device, by means of an arrangement of the transponder unit within a protective housing. On the other hand, by virtue of the special design of the housing such that there is provided an optically readable information carrier being part of the transponder device, even upon a possibly occurring damaging or malfunction of the transponder device there is the option to get the stored information in a redundant manner and unambiguously allocated to the object by virtue of the fastening edge.

The inventive transponder device comprises an optically readable information carrier being arranged within the receiving space of the housing and being transparently covered by a housing front wall such that another information carrier protected against external impacts is provided additionally to the transponder unit, which information carrier is independent of the function of the transponder unit and contains information being redundant or supplemented for instance in the form of a barcode.

According to the invention, the transponder device comprises a locating device for detecting a spatial separation of the locating device and the transponder unit being arranged in the recess formed by a recessed arrangement of the housing rear wall and covered by the fastening surface of an object to which the transponder device is mounted, the locating device working independently of the function of the transponder unit.

In a preferred embodiment the fastening edge exposes an adhesive for attachment to a fastening surface of the object. According to another preferred embodiment the fastening edge comprises through holes for an attachment to a fastening surface by bolt means, for example screws or rivets.

In an optional embodiment of the transponder device, the transponder unit is arranged at the housing rear wall and the information carrier is arranged at the housing front wall. This allows for an arrangement of the transponder unit being reliable against external forces at a distance from the housing front wall being exposed to environmental conditions. Simultaneously, by virtue of the arrangement of the information carrier at the housing front wall, a good optical recognizability and readability respectively of the information carrier can be ensured.

It is especially advantageous when the transponder unit is arranged on a rear side of the optically readable information carrier that faces the housing rear wall, and when the information carrier is located in an intermediary plane at a distance from the housing rear wall and the housing front wall. By this measure, it is in the first instance possible to employ the information carrier itself as supporting substrate for the transponder unit, the substrate being positioned by means of an arrangement at a distance from both the housing rear wall and the housing front wall in an area being especially protected against impacts. Providing the housing front wall and the housing rear wall with support devices facing one another, which may advantageously be formed as webs or ribs, offers a particularly advantageous option for implementing the arrangement of the information carrier in the intermediary plane.

In accordance with a particularly advantageous embodiment of the transponder device, the housing is formed at least in two parts comprising a fastening part having the housing rear wall formed therein, and a cover part having the housing front wall formed therein. In this way, the arrangement of the information carrier within the housing is implemented by simply inserting the information carrier into a housing part and subsequently realizing a joint connection between the fastening part and the cover part.

In order to realize that the transponder unit and the information carrier respectively are held within the housing in a hermetically sealed manner, it is particularly advantageous to have the fastening part and the cover part sealingly connected to one other in a connection area.

One readily feasible embodiment to have a sealed connection is to have a press fitting between the fastening part and the cover part.

Depending on the materials used for the manufacture of the housing, it may prove advantageous to arrange a sealing device in the connection area.

Alternatively the connection between the fastening part and the cover part is formed by ultrasonic welding or gluing.

Under ambient conditions in a harsh environment there might be not only the risk of malfunctioning or destruction of the transponder unit but also the risk that the transponder device becomes detached from the object, thus misinformation regarding the position of the object may occur as a result of the detachment of a still functional transponder device from the object.

According to the preferred embodiment there is the option to detect the positioning of the transponder unit disposed in a joint housing with the locating device in a redundant manner. In the event that the locating device is in a particularly simple embodiment for instance formed from a metal object, such as a metal ball, it is rendered feasible to detect the position of the transponder unit either via the signal emitted by the transponder unit, or otherwise via detection of the locating device being in this embodiment designed as a metal ball by means of a metal detector. When the positional coordinates detected redundantly are subsequently non-conforming or exceeding an admissible range of tolerance, it can be concluded that the transponder device has become detached from the object at least to the extent that a spatial separation of the locating device and the transponder unit has been the result.

Alternatively, it is also possible to have the recess formed at the housing for receiving the locating device designed in such a manner that the locating device, namely for instance the metal object, is captively held within the recess. Thus, the locating device remains attached at the transponder device even when the transponder device and the housing respectively have become detached from the object. Hence, it is also feasible to retrieve the transponder device independently of a functional transponder unit. A transponder device embodied in the aforesaid manner is of special importance in food production where devices employed in production processes may be equipped with transponder devices susceptible of getting into the food when becoming detached from the device. Transponder devices of the above specified type may by means of locating devices arranged at the housing still be reliably located and removed from the food even in the instance that the transponder unit is itself no longer functional.

In an advantageous embodiment of the invention, the locating device may be formed as an active device emitting a location signal, such that the retrieval and the verification respectively of the position of the transponder device can he performed devoid of an actively-driven detector device.

Alternatively, it is also possible to have the locating device designed as a passive locating device reflecting, for instance, a location signal emitted by the detector device, thus allowing that the locating device may itself be formed in a manner as simple as possible, for instance as a metal ball.

An advantageous embodiment of the transponder device will be discussed on the basis of the drawings in the following, whereby:
**Fig. 1** illustrates a perspective view of a transponder device;
**Fig. 2** illustrates a longitudinal-sectional view of the transponder device shown in **Fig. 1** along intersection lines II-II of **Fig. 1****;**
**Fig. 3** illustrates a bottom view of an information carrier inserted into the housing shown in **Fig. 1****;**
**Fig. 4** illustrates a sectional view of the transponder device shown in **Fig. 1** along intersection lines IV-IV.

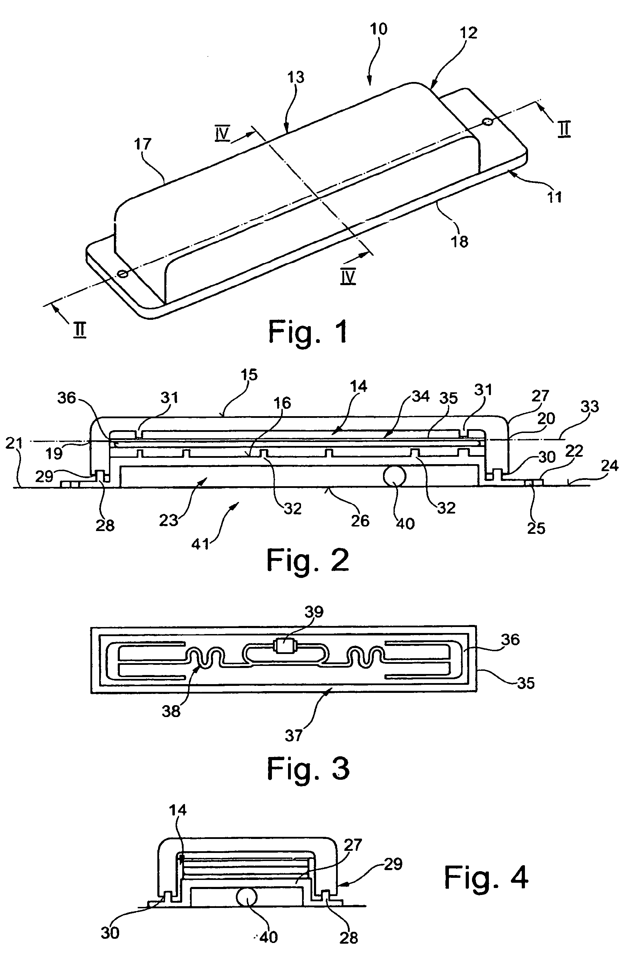

**Fig. 1** illustrates a transponder device 10 comprising a housing which is in this case formed of two parts, namely a fastening part 11 and a cover part 12.

As is clearly apparent from studying **Figs. 2** and **3** as an entirety, the housing 13 has a receiving space 14 defined at the top and at the bottom by a housing front wall 15 formed at the cover part 12 and by a housing rear wall 16 respectively formed at the fastening part 11. Along the peripheral side, the receiving space 14 is defined by longitudinal side walls 17, 18 and transversal side walls 19, 20 of the cover part 12.

The fastening part 11 having a recess 23 is formed thereon as a result of a recessed arrangement of the housing rear wall 15 relative to a fastening edge 22 formed in a fastening plane 21. The fastening part 11 serves for attachment of an object to be marked at a fastening surface 24. The attachment of the fastening part 11 at the fastening surface 24 may for instance be performed by means of fastening means, such as rivets or screws, being connected to the fastening surface 24 via fastening holes 25 provided in the fastening edge 22.

As is apparent from studying **Figs. 2** and **4****,** the recess 23 formed by the recessed arrangement of the housing rear wall 15 at the fastening part 11 on a fastening side 41 of the housing 13 is equipped with an opening 26 being formed in the fastening plane 21 and being covered by the latter when the fastening part 11 is arranged on the fastening surface 24.

An engagement web 28 engages into an engagement groove 30 being formed corresponding to the engagement web 28 in a frontal edge 29 of the cover part 12 for realizing a sealed connection between the fastening part 11 with the cover part 12 in order to create a joint connection. The engagement web 28 is formed circumferentially in relation to a pedestal-like elevated portion 27 formed by the housing rear wall 16 relative to the fastening edge 22.

As can be seen, particularly from **Fig. 2****,** both the housing rear wall 16 and the housing front wall 15 are provided with support webs 31, 32 positioned on their inner sides that face the receiving space 14, the support webs being dimensioned so as to hold therebetween an information carrier 30 in its position in an intermediary plane 33 formed between the housing rear wall 16 and the housing front wall 15.

The information carrier 34 has a barcode provided on a carrier substrate 35, the barcode being in this context not specified in detail and readable at least through the housing front wall 15 transparently formed in the region of the barcode.

As illustrated in **Fig. 3****,** the carrier substrate 35 of the information carrier 34 is provided with a transponder unit 37 being in this embodiment arranged on a foil carrier 36 and having a chip 39 being in contact with an antenna device 38.

Differing from the illustration shown in **Fig. 3****,** the transponder unit 37 and the antenna device 38 respectively may also be directly attached onto the carrier substrate 35. Likewise differing from the illustration shown in **Fig. 3****,** the antenna device may not only be formed of an electrically conductive material structure, but may instead for instance also be formed of a wire conductor.

**Figs. 2** and **4** illustrate the transponder device 10 in an arrangement attached on a fastening surface 24 having a locating device being in this embodiment formed as metal ball 40 held in a recess 23 covered by the fastening surface 24. When the fastening part 11 becomes detached from the fastening surface 24, the metal ball 40 is likely to get out of the recess 23 so that diverging positions between the transponder unit 37 and the metal ball 40 are detectable by means of a reading device interacting with the transponder unit 37 and a detector device interacting with the metal ball 40. This results in the conclusion that the transponder device 10 is no longer located at the object to be marked allowing that appropriate measures be taken to re-establish the spatial allocation of the transponder device and the object to be marked.

Impact-resistant plastics, such as polycarbonate, represent a suitable material to be used for the housing 13 of the transponder device. Moreover, basically any material, provided that the material does not impair the function of the transponder unit and the detection potential for the locating device held in the recess of the housing, may be used. In the event that, according to the previously specified exemplary embodiments, there is arranged an optically readable information carrier in the housing of the transponder unit, the housing front wall is at least in the region of the optically readable information carrier formed transparently.

## Claims

1. Transponder device (10) comprising a transponder unit (37), which is arranged in a housing (13) and has an antenna device (38) and a chip (39), the housing forming a receiving space between a transparent front wall (15) and a housing rear wall (16) having arranged therein an optically readable information carrier (34), the housing rear wall having a fastening edge (22) defining a fastening plane (21) of the housing,
**characterized by**
a locating device (40) for detecting a spatial separation of the locating device and the transponder unit being independent of the function of the transponder unit and being arranged in a recess formed by a recessed arrangement of the housing rear wall (16) and covered by a fastening surface (24) of an object to which the transponder device is mounted, so that the locating device is likely to get out of the recess when the transponder device becomes detached from an object.

2. Transponder device according to claim 1,
wherein the fastening edge exposes an adhesive for attachment to a fastening surface.

3. Transponder device according to claim 1,
wherein the fastening edge comprises through holes for an attachment to a fastening surface by bolt means.

4. Transponder device according to claim 1,
wherein the information carrier (34) is arranged at the housing front wall (15) and the transponder unit (37) is arranged at the housing rear wall (16), the housing rear wall being recessed relative to the fastening plane (21), thereby forming a recess (23) opened towards the fastening plane (21).

5. Transponder device according to claim 4,
wherein the transponder unit (37) is arranged on a rear side of the optically readable information carrier (34) that faces the housing rear wall (16), the information carrier being located in an intermediary plane (33) at a distance from the housing rear wall (16) and the housing front wall (15).

6. Transponder device according to claim 5,
wherein for a defined arrangement of the information carrier (34) in the intermediary plane (33) the housing front wall (15) and the housing rear wall (16) are provided with support devices (31, 32) facing one another.

7. Transponder device according to claim 6,
wherein the support devices (31, 32) are formed as webs.

8. Transponder device according to any of the preceding claims,
wherein the housing (13) is formed at least in two parts comprising a fastening part (11) having the housing rear wall (16) formed therein and a cover part (12) having the housing front wall (15) formed therein.

9. Transponder device according to claim 8,
wherein the fastening part (11) and the cover part (12) are sealingly connected to one another in a connection area.

10. Transponder device according to claim 9,
wherein the connection between the fastening part (11) and the cover part (12) is formed by a press-fitting.

11. Transponder device according to claim 10,
wherein a sealing device is arranged in the connection area.

12. Transponder device according to claim 9,
wherein the connection between the fastening part (11) and the cover part (12) is formed by ultrasonic welding.

13. Transponder device according to claim 9,
wherein the connection between the fastening part (11) and the cover part (12) is formed by gluing.

14. Transponder device according to any of the preceding claims,
wherein the locating device is formed as an active device emitting a location signal.

15. Transponder device according to any of the preceding claims,
wherein the locating device (40) is formed as a passive device reflecting a location signal.

## Patentansprüche

1. Transpondereinrichtung (10) mit einer in einem Gehäuse (13) angeordneten, eine Antenneneinrichtung (38) und einen Chip (39) aufweisenden Transpondereinheit (37), wobei das Gehäuse einen Aufnahmeraum zwischen einer transparenten Frontwand (15) und einer Gehäuserückwand (16) bildet, wobei ein optisch lesbarer Informationsträger (34) darin angeordnet ist, wobei die Gehäuserückwand einen Befestigungsrand (22) aufweist, welcher eine Befestigungsebene (21) des Gehäuses begrenzt,
**gekennzeichnet durch**
eine von der Funktion der Transpondereinheit unabhängige und in einer Ausnehmung angeordnete Ortungseinrichtung (40) zum Detektieren einer räumlichen Trennung der Ortungseinrichtung und der Transpondereinheit, wobei die Ausnehmung **durch** eine zurückversetzte Anordnung der Gehäuserückwand (16) gebildet ist und **durch** eine Befestigungsoberfläche (24) eines Objekts, an dem die Transpondereinrichtung angebracht ist, abgeschlossen ist, sodass die Ortungseinrichtung im Falle eines Ablösens der Transpondereinrichtung von einem Objekt aus der Ausnehmung hinausgelangen kann.

2. Transpondereinrichtung nach Anspruch 1,
wobei der Befestigungsrand einen Klebstoff zum Befestigen an einer Befestigungsoberfläche freigibt.

3. Transpondereinrichtung nach Anspruch 1,
wobei der Befestigungsrand Durchgangslöcher zur Befestigung an einer Befestigungsoberfläche mittels Bolzenmitteln umfasst.

4. Transpondereinrichtung nach Anspruch 1,
wobei der Informationsträger (34) an der Gehäusefrontwand (15) angeordnet ist und die Transpondereinheit (37) an der Gehäuserückwand (16) angeordnet ist, wobei die Gehäuserückwand gegenüber der Befestigungsebene (21) zurückversetzt ist, wodurch eine zu der Befestigungsebene (21) hin offene Ausnehmung (23) ausgebildet ist.

5. Transpondereinrichtung nach Anspruch 4,
wobei die Transpondereinheit (37) auf einer der Gehäuserückwand (16) zugewandten Rückseite des optisch lesbaren Informationsträgers (34) angeordnet ist, wobei sich der Informationsträger in einer von der Gehäuserückwand (16) und der Gehäusefrontwand (15) beabstandeten Zwischenebene (33) befindet.

6. Transpondereinrichtung nach Anspruch 5,
wobei zur definierten Anordnung des Informationsträgers (34) in der Zwischenebene (33) die Gehäusefrontwand (15) und die Gehäuserückwand (16) mit einander zugewandten Stützeinrichtungen (31, 32) versehen sind.

7. Transpondereinrichtung nach Anspruch 6,
wobei die Stützeinrichtungen (31, 32) als Stege ausgebildet sind.

8. Transpondereinrichtung nach einem der vorangehenden Ansprüche,
wobei das Gehäuse (13) zumindest zweiteilig ausgebildet ist, mit einem Befestigungsteil (11), in dem die Gehäuserückwand (16) ausgebildet ist, und einem Deckelteil (12), in dem die Gehäusefrontwand (15) ausgebildet ist.

9. Transpondereinrichtung nach Anspruch 8,
wobei das Befestigungsteil (11) und das Deckelteil (12) in einem Verbindungsbereich abdichtend miteinander verbunden sind.

10. Transpondereinheit nach Anspruch 9,
wobei die Verbindung zwischen dem Befestigungsteil (11) und dem Deckelteil (12) mittels einer Presspassung ausgebildet ist.

11. Transpondereinheit nach Anspruch 10,
wobei in dem Verbindungsbereich eine Dichteinrichtung angeordnet ist.

12. Transpondereinheit nach Anspruch 9,
wobei die Verbindung zwischen dem Befestigungsteil (11) und dem Deckelteil (12) mittels Ultraschallschweißen ausgebildet ist.

13. Transpondereinheit nach Anspruch 9,
wobei die Verbindung zwischen dem Befestigungsteil (11) und dem Deckelteil (12) mittels Verkleben ausgebildet ist.

14. Transpondereinheit nach einem der vorangehenden Ansprüche,
wobei die Ortungseinrichtung als aktive, ein Ortungssignal emittierende Einrichtung ausgebildet ist.

15. Transpondereinheit nach einem der vorangehenden Ansprüche, wobei die Ortungseinrichtung (40) als passive, ein Ortungssignal reflektierende Einrichtung ausgebildet ist.

## Revendications

1. Dispositif (10) de transpondeur, ayant une unité (37) de transpondeur, qui est disposée dans un boîtier (13) et présente un dispositif (38) d'antenne et une puce (39), le boîtier formant un espace de logement entre une paroi (15) avant transparente et une paroi (16) de boîtier arrière, un support (34) d'informations optiquement lisible y étant disposé, la paroi de boîtier arrière ayant une bordure (22) de fixation définissant un plan (21) de fixation du boîtier,
**caractérisé par**
un dispositif (40) de localisation pour détecter une séparation spatiale du dispositif de localisation et de l'unité de transpondeur, le dispositif de localisation étant indépendant de la fonction de l'unité de transpondeur et étant disposé dans un évidement qui est formé par une disposition reculée de la paroi (16) de boîtier arrière et couvert par une surface (24) de fixation d'un objet auquel le dispositif de transpondeur est attaché, de façon que le dispositif de localisation est susceptible de sortir de l'évidement quand le dispositif de transpondeur est détaché d'un objet.

2. Dispositif de transpondeur selon la revendication 1,
dans lequel la bordure de fixation révèle un adhésif pour l'application à une surface de fixation.

3. Dispositif de transpondeur selon la revendication 1,
dans lequel la bordure de fixation comprend des trous d'interconnexion pour une application à une surface de fixation par des moyens de boulon.

4. Dispositif de transpondeur selon la revendication 1,
dans lequel le support (34) d'informations est disposé à la paroi (15) de boîtier avant et l'unité (37) de transpondeur est disposée à la paroi (16) de boîtier arrière, la paroi de boîtier arrière étant reculée par rapport au plan (21) de fixation, par quoi un évidement (23) qui est ouvert vers le plan (21) de fixation est formé.

5. Dispositif de transpondeur selon la revendication 4,
dans lequel l'unité (37) de transpondeur est disposée sur une face arrière du support (34) d'informations qui est optiquement lisible, la face arrière faisant face à la paroir (16) de boîtier arrière, ledit support d'informations se trouvant dans un plan (33) intermédiaire qui est espacé de la paroi (16) de boîtier arrière et de la paroi (15) de boîtier avant.

6. Dispositif de transpondeur selon la revendication 5,
dans lequel, pour une disposition définie du support (34) d'informations dans le plan (33) intermédiaire, la paroi (15) de boîtier avant et la paroi (16) de boîtier arrière sont munies de dispositifs (31, 32) de soutien faisant face l'un à l'autre.

7. Dispositif de transpondeur selon la revendication 6,
dans lequel les dispositifs (31, 32) de soutien sont formés en tant que passerelles.

8. Dispositif de transpondeur selon l'une quelconque des revendications précédentes,
dans lequel le boîtier (13) est formé au moins en deux pièces, ayant une partie (11) de fixation, dans laquelle la paroi (16) de boîtier arrière est formée, et une partie (12) à couvercle, dans laquelle la paroi (15) de boîtier avant est formée.

9. Dispositif de transpondeur selon la revendication 8,
dans lequel la partie (11) de fixation et la partie (12) à couvercle sont connectées l'une à l'autre de façon étanche dans une zone de connexion.

10. Dispositif de transpondeur selon la revendication 9,
dans lequel la connexion entre la partie (11) de fixation et la partie (12) à couvercle est formée via un ajustage serré.

11. Dispositif de transpondeur selon la revendication 10,
dans lequel un dispositif d'étanchéité est disposé dans la zone de connexion.

12. Dispositif de transpondeur selon la revendication 9,
dans lequel la connexion entre la partie (11) de fixation et la partie (12) à couvercle est formée via soudage par ultrasons.

13. Dispositif de transpondeur selon la revendication 9,
dans lequel la connexion entre la partie (11) de fixation et la partie (12) à couvercle est formée via collage.

14. Dispositif de transpondeur selon l'une quelconque des revendications précédentes,
dans lequel le dispositif de localisation est formé en tant que dispositif actif émettant un signal de localisation.

15. Dispositif de transpondeur selon l'une quelconque des revendications précédentes,
dans lequel le dispositif (40) de localisation est formé en tant que dispositif passif réfléchissant un signal de localisation.
